# EUROPÄISCHE PATENTSCHRIFT

(11) **EP 0 926 650 B1**
(45) Veröffentlichungstag und Bekanntmachung des Hinweises auf die Patenterteilung: **07.04.2004**
(21) Anmeldenummer: 98124534.3
(22) Anmeldetag: 22.12.1998
(51) Int. Cl.: G08G 1/133

(54) **Anlage zur Navigationsunterstützung eines Fahrzeugs**
Device for supporting the navigation of a vehicle
Appareil de support à la navigation d'un véhicule

(30) Priorität: 24.12.1997 DE 19757981
(43) Veröffentlichungstag der Anmeldung: 30.06.1999
(73) Patentinhaber: ROBERT BOSCH GMBH, 70442 Stuttgart (DE)
(72) Erfinder: Rychlak, Stefan, 31241 Ilsede (DE)

(56) Entgegenhaltungen:
- EP-A- 0 525 895
- EP-A- 0 697 580
- DE-A- 3 805 810
- DE-A- 4 112 828
- US-A- 4 887 234
- US-A- 5 627 547

## Beschreibung

### Stand der Technik

Die Erfindung betrifft eine Anlage zur Navigationsunterstützung eines Fahrzeugs, wobei davon ausgegangen wird, daß das Fahrzeug mit einem Radio ausgestattet ist, dem ein mobiler Datenträger mit Schlüsselfunktion zugeordnet ist, so daß das Radio erst nach Prüfung des Datenträgers durch einen dem Radio zugeordneten Microprozessor aktivierbar ist, wie an sich aus der DE-A-4 112 828 bekannt.

Aus der Praxis ist die Verwendung von sog. Key-Cards als Diebstahlsicherung für Autoradios bekannt. Bei einer Key-Card handelt es sich um eine mit einer individuellen Kennung für ein bestimmtes Radiogerät versehene Karte. Die Kennung kann bspw. durch eine speziellen Lochanordnung in der Karte, also in mechanischer Form realisiert sein, oder auch in elektronischer Form, indem eine Kennung in einem eigens dafür vorgesehenen Mikrochip abgespeichert ist. Die Key-Card wird in eine dem Autoradio zugeordnete, eigens dafür vorgesehene Aufnahmevorrichtung eingeführt, wo die abgespeicherte Kennung überprüft wird. Nur wenn die auf der Key-Card abgespeicherte Kennung der dem Radiogerät zugeordneten Kennung entspricht, wird das Radiogerät mit Hilfe eines Microprozessors freigegeben so daß es betrieben werden kann. Die einzelnen Radiogeräte eines Typs werden also über ihre Kennung individualisiert und können nur in Verbindung mit der ihnen jeweils zugeordneten Key-Card betrieben werden. Ohne entsprechende Key-Card ist ein solchermaßen geschütztes Radiogerät also wertlos.

Mit der vorliegenden Erfindung werden verschiedene Möglichkeiten vorgeschlagen, ein Autoradio mit den voranstehend beschriebenen Funktionen im Rahmen einer Anlage zur Navigationsunterstützung eines Fahrzeugs zu nutzen.

### Vorteile der Erfindung

Voraussetzung für eine solche erfindungsgemäße Nutzung ist die Ausstattung des mobilen Datenträgers - der Key-Card - mit einem zusätzlichen, beschreibbaren und lesbaren Speicher. Erfindungsgemäß wird nun vorgeschlagen, Mittel zum Empfangen und Auswerten von Ortungssignalen zur Bestimmung der aktuellen Fahrzeugposition vorzusehen und Mittel zum Abspeichem der jeweils bestimmten aktuellen Fahrzeugposition und also des tatsächlich von dem Fahrzeug zurückgelegten Weges in dem zusätzlichen Speicher des mobilen Datenträgers. In diesem Falle erfüllt der Datenträger also zusätzlich zu seiner Schlüsselfunktion auch die Funktion eines Fahrtenbuchs. Dazu können neben den mit Hilfe von Ortungssignalen bestimmten Positionsdaten des Fahrzeugs auch Zeitangaben abgespeichert werden, woraus sich Informationen über die Fahrtdauer, Geschwindigkeit und ggf. Pausen ermitteln lassen, wie an sich aus der US-A-5 627 547 bekannt.

In den nachgeordneten Patentansprüchen sind vorteilhafte Ausgestaltungen und Weiterbildungen der im Patentanspruch 1 angegebenen Anlage zur Navigationsunterstützung eines Fahrzeugs aufgeführt.

Obwohl die Funktionsweise der erfindungsgemäßen Anlage durch Beschreibung einer Key-Card als bevorzugtem mobilen Datenträger erläutert worden ist, sei an dieser Stelle angemerkt, daß im Rahmen der erfindungsgemäßen Anlage selbstverständlich auch andersartige mobile Datenträger Verwendung finden können, wenn sie mit einem beschreibbaren und lesbaren Speicher ausgestattet sind.

Besonders vorteilhaft ist es, wenn die aktuelle Fahrzeugposition anhand von Global Positioning System (GPS)-Signalen bestimmt wird, da die erfindungsgemäße Anlage in diesem Falle auf eine bereits vorhandene und bewährte Infrastruktur zurückgreifen kann. Die erfindungsgemäße Anlage muß dann mit entsprechenden Mitteln zum Empfangen und Auswerten von GPS-Signalen ausgestattet sein.

Wie bereits erwähnt, wird erfindungsgemäß vorgeschlagen, den mobilen Datenträger einer herkömmlichen Diebstahlsicherung für Autoradios aufzurüsten, nämlich einen zusätzlichen Speicher vorzusehen, um insgesamt die Funktionalität der Diebstahlsicherung zu erhöhen und ihre Komponenten im Rahmen einer Anlage zur Navigationsunterstützung zu nutzen. Neben der Funktionalität des mobilen Datenträgers kann auch die Funktionalität des Microprozessors erhöht werden, der im Rahmen der Diebstahlsicherung zur Überprüfung der auf dem mobilen Datenträger abgespeicherten Kennung und zur Ansteuerung des Radios dient. Dieser Microprozessor kann nun in vorteilhafter Weise auch im Rahmen der Auswertung der Ortungssignale eingesetzt werden.

Die voranstehend beschriebenen Ausführungsformen einer erfindungsgemäßen Anlage dienen insofern als Navigationshilfen, als sich mit ihnen die jeweils aktuelle Position des Fahrzeugs ermitteln läßt. Nachfolgend werden Varianten der erfindungsgemäßen Anlage beschrieben, mit denen sich eine Fahrzeugnavigation im herkömmlichen Sinne, nämlich eine Wegweisung durchführen läßt.

Dazu sind Mittel zum Abspeichem von Zielvorgaben auf dem Datenträger, d.h. in dem zusätzlichen Speicher des Datenträgers, vorgesehen, Mittel zum Berechnen einer Fahrroute ausgehend von der aktuellen Fahrzeugposition und den abgespeicherten Zielvorgaben und Mittel zur Wiedergabe von Weginformationen in Abhängigkeit von der aktuellen Fahrzeugposition und den abgespeicherten Zielvorgaben. Bei den Zielvorgaben wird es sich in erster Linie um anzusteuemde Zielorte handeln. Zielvorgaben können aber auch Termine oder ein Kostenfaktor sein. Das Abspeichem der Zielvorgaben kann mit Hilfe einer innerhalb oder außerhalb des Fahrzeugs angeordneten Programmiervorrichtung für den Datenträger erfolgen. Soll die Programmierung des Datenträgers durch den Fahrer selbst bzw. innerhalb des Fahrzeugs möglich sein, so könnte die Programmierung auch mit Hilfe des Radios, bspw. des bereits erwähnten Microprozessors, über die Funktionstasten des Radios erfolgen, die dann entsprechend belegt sein müßten. Die Mittel zum Berechnen einer Fahrroute werden in der Regel elektronisch abgespeichertes Kartenmaterial umfassen und mindestens ein auf dieses zugreifendes Routensuchprogramm. Außerdem muß ein Speichermedium für die sog. Weginformationen, nämlich Standard-Richtungsangaben, wie z.B. "an der nächsten Kreuzung rechts" vorhanden sein.

Genauso wie der dem Radio zugeordnete Microproezessor zur Bestimmung der aktuellen Fahrzeugposition anhand der Ortungssignale einsetzbar ist, kann der Mikroprozessor bei entsprechender Programmierung auch zur Berechnung der Fahrroute eingesetzt werden. Des weiteren ist es von Vorteil, wenn dieser Microprozessor auch die Wiedergabe der Weginformationen steuert.

Im Fahrzeugbereich ist es von besonderem Vorteil, wenn die Wiedergabe der Weginformationen in Form von Sprache erfolgt, da dies den Fahrer am wenigsten ablenkt, sich der Fahrer also uneingeschränkt auf den Verkehr konzentrieren kann. Im Rahmen der erfindungsgemäßen Anlage ist die Wiedergabe der Weginformationen in Form von Sprache auch deshalb besonders vorteilhaft, da die Wiedergabe hier über die vorhandene Lautsprechereinrichtung des Radios erfolgen kann.

Wie voranstehend erläutert beruht die von der erfindungsgemäßen Anlage durchgeführte Wegweisung auf einem Vergleich der ermittelten aktuellen Fahrzeugposition mit der auf dem Datenträger abgespeicherten Fahrroute. In der Praxis ist es oftmals erforderlich, die Zielvorgaben kurzfristig zu ändern, bspw. weil sich die Fahrt zu einem Zielort erübrigt hat oder sich kurzfristige weitere Zielorte ergeben haben. In einer vorteilhaften Variante der erfindungsgemäßen Anlage zur Navigationsunterstützung sind nun zusätzlich auch Mittel zur Modifikation der abgespeicherten Zielvorgaben über Telefonsignale vorgesehen. Besonders vorteilhaft in diesem Zusammenhang ist es, wenn die Telefonsignale dem Microprozessor zugeführt werden und die Modifikation der abgespeicherten Zielvorgaben dann ebenfalls mit Hilfe des Microprozessors erfolgt. Dies stellt eine zusätzliche Erweiterung des Funktionsumfangs des ursprünglich lediglich in Verbindung mit einer Diebstahlsicherung eingesetzten Microprozessors dar.

Neben einer Telefonverbindung, die lediglich eine Signalübertragung in eine Richtung ermöglicht, bei der der Microprozessor nämlich ausschließlich als Empfänger fungiert, ist auch die Realisierung einer bidirektionalen Telefonverbindung zu dem Microprozessor denkbar. In diesem Falle könnten die auf dem Datenträger abgespeicherten Daten auch per Telefon abgerufen werden und so also bspw. die aktuelle Position des Fahrzeugs abgefragt werden.

Alternativ oder in Ergänzung zu der Möglichkeit, die auf dem Datenträger abgespeicherten Zielvorgaben über Telefonsignale zu modifizieren, besteht in einer vorteilhaften Ausgestaltung der erfindungsgemäßen Anlage auch die Möglichkeit, Telefonmitteilungen direkt über die Lautsprechereinrichtung des Radios wiederzugeben. Dem Fahrer können hier also Weginformationen auch direkt per Telefon übermittelt werden.

In der Praxis erweist es sich oftmals als vorteilhaft, wenn die auf dem Datenträger abgespeicherten Zielvorgaben auch optisch wiedergegeben werden, bspw. um den Fahrer über kurzfristige Modifikationen der Zielvorgaben auf dem laufenden zu halten. In einer vorteilhaften Ausführungsform der erfindungsgemäßen Anlage ist zu diesem Zweck eine Anzeigevorrichtung vorgesehen.

DE-A-3 805 810 offenbart einen mobilen Datenträger für Navigationszwecken und einen nicht-mobilen Speicher als Diebstahlsicherung.

### Zeichnung

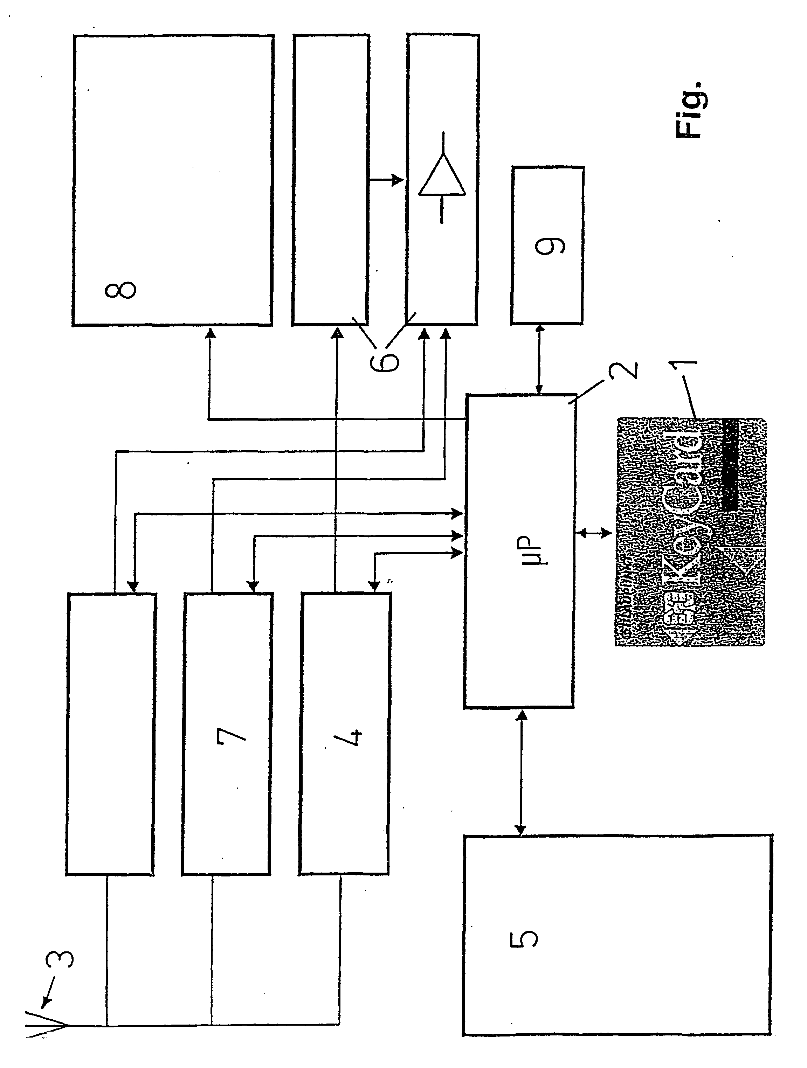

In der einzigen Figur ist der Aufbau einer erfindungsgemäßen Anlage zur Navigationsunterstützung eines Fahrzeugs schematisch dargestellt. Sowohl der Aufbau als auch die Funktionsweise der dargestellten Anlage werden nachfolgend anhand zweier Verwendungsbeispiele beschrieben.

### Beschreibung der Beispiele

Die in der einzigen Figur dargestellte Anlage zur Navigationsunterstützung eines Fahrzeugs umfaßt als zentrale Komponente einen mobilen Datenträger 1 und einen mit diesem kommunizierenden Microprozessor 2. Der mobile Datenträger 1 dient in seiner ursprünglichen Funktion als Diebstahlsicherung für ein Autoradio, dem der Microprozessor 2 zugeordnet ist. Der mobile Datenträger 1 ist mit einer Kennung für ein ganz bestimmtes Radiogerät versehen. Dieses Radiogerät kann nur mit Hilfe des mobilen Datenträgers 1 aktiviert werden, und zwar erst nach Prüfung der Kennung des Datenträgers 1 durch den Microprozessor 2.

Erfindungsgemäß weist der Datenträger 1 einen beschreibbaren und lesbaren Speicher auf. Außerdem umfaßt die erfindungsgemäße Anlage Mittel zum Empfangen und Auswerten von Ortungssignalen zur Bestimmung der aktuellen Fahrzeugposition und Mittel zum Abspeichem der jeweils bestimmten aktuellen Fahrzeugposition und also des tatsächlich von dem Fahrzeug zurückgelegten Weges in dem Speicher des Datenträgers 1.

In dem hier dargestellten Ausführungsbeispiel handelt es sich bei dem mobilen Datenträger 1 um eine sog. Key-Card, die mit einem Microchip für die Kennung versehen ist.

Die Bestimmung der aktuellen Fahrzeugposition erfolgt hier über GPS-Signale, die mit Hilfe einer Antenneneinrichtung 3 und einer eigenen Empfangseinrichtung 4 für Ortungssignale empfangen werden und dem Microprozessor 2 zur Auswertung zugeführt werden. Die so ermittelten aktuellen Fahrzeugpositionen werden dann in dem Speicher des Datenträgers 1 abgespeichert. Auf diese Weise wird der tatsächlich von dem Fahrzeug zurückgelegte Weg protokolliert. Zusätzlich können noch Zeitinformationen abgespeichert werden.

Die voranstehend beschriebenen Funktionen der erfindungsgemäßen Anlage werden nachfolgend anhand eines ersten Verwendungsbeispiels näher erläutert.

Die erfindungsgemäße Anlage kann vorteilhaft im Rahmen der Organisation und Koordination Kurierdienstleistungen eingesetzt werden, vorausgesetzt, daß die verwendeten Fahrzeuge mit entsprechenden Autoradios ausgestattet sind. Dazu wird jedem Fahrer ein mobiler Datenträger zugeordnet. Über die von der erfindungsgemäßen Anlage empfangenen GPS-Signale wird zunächst die Startposition des Fahrzeugs festgestellt. Diese wird auf dem Datenträger abgespeichert. Durch Abspeichem der dann in regelmäßigen Abständen erneut bestimmten aktuellen Fahrzeugposition wird die gesamte Fahrstrecke des Fahrzeugs protokolliert und auf dem mobilen Datenträger abgespeichert. Außerdem lassen sich über zusammen mit den Positionsangaben abgespeicherte Zeitangaben auch die Fahrdauer, Geschwindigkeit und die Dauer von Pausen ermitteln und auf dem Datenträger abspeichern. Die von einem Fahrer zurückgelegte Fahrstrecke zusammen mit etwaigen Zusatzinformationen kann später dann mit Hilfe eines geeigneten Lesegeräts als Liste ausgegeben werden bzw. als Strecke, bspw. auf einem PC, dargestellt werden.

Neben der Funktion als Fahrtenschreiber kann die in der Figur dargestellte Anlage auch zur Navigation des Fahrzeugs eingesetzt werden. Dazu umfaßt die erfindungsgemäße Anlage Mittel zum Abspeichem von Zielvorgaben in dem Speicher des Datenträgers 1, Mittel zum Berechnen einer Fahrroute ausgehend von der aktuellen Fahrzeugposition und den abgespeicherten Zielvorgaben und Mittel zur Wiedergabe von Weginformationen in Abhängigkeit von der aktuellen Fahrzeugposition und der berechneten Fahrroute.

In der einzigen Figur sind mit 5 Eingabemittel für die Zielvorgaben bezeichnet. Diese Eingabemittel 5 kommunizieren mit dem Microprozessor 2, mit dessen Hilfe zum einen die Zielvorgaben in dem Speicher des Datenträgers 1 abgespeichert werden und zum anderen eine Fahrroute berechnet wird.

Dazu kommuniziert der Microprozessor 2 mit der Empfangseinrichtung 4 für die GPS-Signale. Außerdem steuert der Microprozessor 2 auch die Wiedergabe der Weginformationen in Form von Sprache über die Lautsprechereinrichtung 6 des Radios.

In dem hier dargestellten Ausführungsbeispiel lassen sich die auf dem Datenträger 1 abgespeicherten Zielvorgaben über Telefonsignale, die ebenfalls über die Antenneneinrichtung 3 und eine Empfangseinrichtung 7 für Telefonsignale empfangen werden, modifizieren. Dazu werden dem Microprozessor 2 auch die Telefonsignale zugeführt. Das Modifizieren der auf dem Datenträger 1 abgespeicherten Zielvorgaben erfolgt dann ebenfalls mit Hilfe des Mikroprozessors 2.

Im hier dargestellten Ausführungsbeispiel läßt sich eine bidirektionale Telefonverbindung zu dem Microprozessor 2 aufbauen, so daß sich bspw. die in dem Speicher des Datenträgers 1 abgespeicherten Daten, wie z.B. die aktuelle Position des Fahrzeugs, telefonisch abrufen lassen. Daneben können Telefonsignale auch direkt der Lautsprechereinrichtung 6 des Radios zugeführt werden, so daß Telefonmitteilungen auch direkt an den Fahrer gerichtet werden können.

Schließlich ist in dem hier dargestellten Ausführungsbeispiel auch eine Anzeigevorrichtung 8 für die in dem Speicher des Datenträgers 1 abgespeicherten Daten vorgesehen.

Mit 9 ist eine Empfangseinrichtung für Rundfunksignale bezeichnet; und mit 10 ist eine Eingabevorrichtung mit den aus der Praxis bekannten Funktionstasten eines Radios bezeichnet.

Die Navigationsfunktion der in der einzigen Figur dargestellten Anlage wird wieder am Beispiel einer Kurierfahrt erläutert.

Vor Fahrtantritt werden mehrere Zielvorgaben in Form vor Zielorten und Terminen auf dem Datenträger 1 abgespeichert. Nach Einlegen des Datenträgers 1 in die entsprechende Aufnahmevorrichtung des Autoradios wird wieder zunächst die Startposition des Fahrzeugs bestimmt. Anhand der gespeicherten Zielorte und ggf. deren Reihenfolge wird dann eine Fahrroute berechnet, die unter verschiedenen Gesichtspunkten optimiert sein kann, bspw. hinsichtlich der Kosten oder der erforderlichen Fahrzeit. Während der Fahrt wird die aktuell bestimmte Fahrzeugposition immer wieder mit der berechneten Fahrroute verglichen, und der Fahrer wird dann mit entsprechenden Weginformationen versorgt. Außerdem werden in der Anzeigevorrichtung 8 die Zielvorgaben ggf. mit weiteren Informationen für den Fahrer angezeigt. Aufgrund der Möglichkeit, die aktuelle Fahrzeugposition per Telefon abzufragen, kann eine Zentrale immer feststellen, ob ein Fahrzeug plangemäß vorankommt oder Verspätungen auftreten und dementsprechend die Kunden informieren. Bei entsprechender Programmierung des Microprozessors 2 könnte die Zentrale auch automatisch verständigt werden, wenn festgestellt wird, daß bestimmte Zielvorgaben, bspw. Abliefertermine, nicht eingehalten werden können. Außerdem können die Zielvorgaben auch noch nachträglich von der Zentrale geändert werden, um bspw. andere Prioritäten zu setzen. Die neuen Zielvorgaben können dann über eine Telefonverbindung an den Microprozessor 2 weitergegeben werden. Denkbar wäre es auch, daß ein Kunde selbst bspw. die aktuelle Fahrzeugposition eines Kurierwagens abfragt, um zu überprüfen, wo sich eine an ihn gerichtete Lieferung befindet.

Mit der erfindungsgemäßen Anlage ist es auch leicht möglich, Lieferungen von einem Kurierwagen an einen anderen zu übergeben. Dies kann von der Zentrale aus durch Übermittlung von entsprechenden Zielvorgaben organisiert werden. Dadurch können beide Fahrzeuge zu einem bestimmten Übergabeort geleitet werden. Alle voranstehend beschriebenen Vorgänge können durch den jeweiligen Datenträger protokolliert und abgespeichert werden, so daß sich die Lieferkosten sehr genau berechnen lassen.

## Patentansprüche

1. Anlage zur Navigationsunterstützung eines Fahrzeugs, wobei das Fahrzeug mit einem Radio ausgestattet ist, dem ein mobiler Datenträger mit Schlüsselfunktion zugeordnet ist, so daß das Radio erst nach Prüfung des Datenträgers durch einen dem Radio zugeordneten Mikroprozessor aktivierbar ist,
**dadurch gekennzeichnet,**
**daß** der Datenträger einen beschreibbaren und lesbaren Speicher aufweist,
**daß** Mittel zum Empfangen und Auswerten von Ortungssignalen zur Bestimmung der aktuellen Fahrzeugposition vorgesehen sind und
**daß** Mittel zum Abspeichern der jeweils bestimmten aktuellen Fahrzeugposition und also des tatsächlich von dem Fahrzeug zurückgelegten Weges in dem Speicher des Datenträgers vorgesehen sind.

2. Anlage nach Anspruch 1, **dadurch gekennzeichnet, daß** eine mit einem Mikrochip versehene Karte (Key-Card) als mobiler Datenträger dient.

3. Anlage nach einem der Ansprüche 1 oder 2, **dadurch gekennzeichnet, daß** GPS-Signale als Ortungssignale dienen.

4. Anlage nach einem der Ansprüche 1 bis 3, **dadurch gekennzeichnet, daß** die Auswertung der Ortungssignale mit Hilfe des Mikroprozessors erfolgt.

5. Anlage nach einem der Ansprüche 1 bis 4, **dadurch gekennzeichnet,**
**daß** Mittel zum Abspeichern von Zielvorgaben in dem Speicher des Datenträgers vorgesehen sind
**daß** Mittel zum Berechnen einer Fahrroute ausgehend von der aktuellen Fahrzeugposition und den abgespeicherten Zielvorgaben vorgesehen sind und
**daß** Mittel zur Wiedergabe von Weginformationen in Abhängigkeit von der aktuellen Fahrzeugposition und der berechneten Fahrroute vorgesehen sind.

6. Anlage nach Anspruch 5, **dadurch gekennzeichnet, daß** die Berechnung der Fahrroute mit Hilfe des Mikroprozessors erfolgt.

7. Anlage nach einem der Ansprüche 5 oder 6, **dadurch gekennzeichnet, daß** der Mikroprozessor die Wiedergabe der Weginformationen steuert.

8. Anlage nach einem der Ansprüche 5 bis 7, **dadurch gekennzeichnet, daß** die Wiedergabe der Weginformationen in Form von Sprache über die Lautsprechereinrichtung des Radios erfolgt.

9. Anlage nach einem der Ansprüche 5 bis 8, **dadurch gekennzeichnet, daß** Mittel zur Modifikation der abgespeicherten Zielvorgaben über Telefonsignale vorgesehen sind.

10. Anlage nach Anspruch 9, **dadurch gekennzeichnet, daß** die Telefonsignale dem Mikroprozessor zuführbar sind und daß die abgespeicherten Zielvorgaben mit Hilfe des Mikroprozessors modifizierbar sind.

11. Anlage nach Anspruch 10, **dadurch gekennzeichnet, daß** eine bidirektionale Telefonverbindung zu dem Mikroprozessor aufbaubar ist, über die die aktuelle Position des Fahrzeuges und ggf. die in dem Speicher des Datenträgers abgespeicherten Daten abrufbar sind.

12. Anlage nach einem der Ansprüche 9 bis 11, **dadurch gekennzeichnet, daß** Telefonmitteilungen über die Lautsprechereinrichtung des Radios wiedergebbar sind.

13. Anlage nach einem der Ansprüche 1 bis 12, **dadurch gekennzeichnet, daß** eine Anzeigevorrichtung für die in dem Speicher des Datenträgers abgespeicherten Daten vorgesehen ist.

## Claims

1. Installation for navigational assistance in a vehicle, the vehicle being equipped with a radio which has an associated mobile data storage medium having a key function, so that the radio can be activated only after the data storage medium has been checked by a microprocessor associated with the radio,
**characterized**
**in that** the data storage medium has a writeable and readable memory,
**in that** means for receiving and evaluating position-finding signals are provided for the purpose of determining the current vehicle position, and
**in that** means for storing the respectively determined current vehicle position and hence the path which the vehicle has actually covered are provided in the data storage medium's memory.

2. Installation according to Claim 1, **characterized in that** a card provided with a microchip (key card) is used as the mobile data storage medium.

3. Installation according to either of Claims 1 and 2, **characterized in that** GPS signals are used as position-finding signals.

4. Installation according to one of Claims 1 to 3, **characterized in that** the position-finding signals are evaluated using the microprocessor.

5. Installation according to one of Claims 1 to 4, **characterized in that** means for storing destination selections are provided in the data storage medium's memory,
**in that** means for calculating a route of travel on the basis of the current vehicle position and the stored destination selections are provided, and
**in that** means for reproducing path information on the basis of the current vehicle position and the calculated route of travel are provided.

6. Installation according to Claim 5, **characterized in that** the route of travel is calculated using the microprocessor.

7. Installation according to either of Claims 5 and 6, **characterized in that** the microprocessor controls the reproduction of the path information.

8. Installation according to one of Claims 5 to 7, **characterized in that** the path information is reproduced in the form of speech using the radio's loudspeaker device.

9. Installation according to one of Claims 5 to 8, **characterized in that** means for modifying the stored destination selections using telephone signals are provided.

10. Installation according to Claim 9, **characterized in that** the telephone signals can be supplied to the microprocessor, and **in that** the stored destination selections can be modified using the microprocessor.

11. Installation according to Claim 10, **characterized in that** a two-way telephone connection to the microprocessor can be set up which can be used to retrieve the current position of the vehicle and possibly the data stored in the data storage medium's memory.

12. Installation according to one of Claims 9 to 11, **characterized in that** telephone messages can be reproduced using the radio's loud speaker device.

13. Installation according to one of Claims 1 to 12,
**characterized in that** a display apparatus for the data stored in the data storage medium's memory is provided.

## Revendications

1. Appareil de support à la navigation d'un véhicule, le véhicule étant équipé d'une radio, comprenant un support de données mobile doté d'une fonction de verrouillage, de telle sorte que la radio peut être activée uniquement après une vérification du support de données par un microprocesseur associé à la radio,
**caractérisé en ce que**
le support de données présente une mémoire inscriptible et lisible,
des moyens sont prévus pour recevoir et exploiter des signaux de localisation, afin de déterminer la position momentanée du véhicule et
des moyens sont prévus pour stocker dans la mémoire du support de données la position momentanée du véhicule déterminée en permanence ainsi que le trajet réel parcouru par le véhicule.

2. Appareil selon la revendication 1,
**caractérisé en ce qu'**
une carte équipée d'une puce électronique (Key Card) sert de support de données mobile.

3. Appareil selon l'une quelconque des revendications 1 ou 2,
**caractérisé en ce que**
les signaux du GPS servent de signaux de localisation.

4. Appareil selon l'une quelconque des revendications 1 à 3,
**caractérisé en ce que**
l'exploitation des signaux de localisation est effectuée à l'aide du microprocesseur.

5. Appareil selon l'une quelconque des revendications 1 à 4,
**caractérisé par**
des moyens prévus pour stocker des objectifs dans la mémoire du support de données des moyens prévus pour calculer le trajet à partir de la position momentanée du véhicule et des objectifs enregistrés dans la mémoire, et des moyens prévus pour restituer les informations relatives au parcours en fonction de la position momentanée du véhicule et du trajet calculé.

6. Appareil selon la revendication 5,
**caractérisé en ce que**
le calcul du trajet est effectué à l'aide du microprocesseur.

7. Appareil selon l'une quelconque des revendications 5 ou 6,
**caractérisé en ce que**
le microprocesseur commande la restitution des informations relatives au parcours.

8. Appareil selon l'une quelconque des revendications 5 à 7,
**caractérisé en ce que**
la restitution des informations relatives au parcours s'effectue sous forme vocale par le biais du dispositif de haut-parleurs de la radio.

9. Appareil selon l'une quelconque des revendications 5 à 8,
**caractérisé par**
des moyens permettant de modifier les objectifs enregistrés grâce à des signaux téléphoniques.

10. Appareil selon la revendication 9,
**caractérisé en ce que**
les signaux téléphoniques peuvent être envoyés au microprocesseur et les objectifs enregistrés peuvent être modifiés à l'aide du microprocesseur.

11. Appareil selon la revendication 10,
**caractérisé en ce qu'**
une liaison téléphonique bidirectionnelle peut être ajoutée au microprocesseur, afin de permettre la consultation de la position momentanée du véhicule et, le cas échéant, des informations enregistrées dans la mémoire du support de données.

12. Appareil selon l'une quelconque des revendications 9 à 11.
**caractérisé en ce que**
les messages téléphoniques peuvent être retransmis par le dispositif de haut-parleurs de la radio.

13. Appareil selon l'une quelconque des revendications 1 à 12,
**caractérisé en ce qu'**
un dispositif d'affichage est prévu pour les informations enregistrées dans la mémoire du support de données.
